(19) Europäisches Patentamt
European Patent Office
Office européen des brevets

(11) Veröffentlichungsnummer: **0 149 171**
**A2**

(12) # EUROPÄISCHE PATENTANMELDUNG

(21) Anmeldenummer: 84115662.3

(22) Anmeldetag: 18.12.84

(51) Int. Cl.⁴: C 08 K 5/17
C 08 K 5/34, C 08 K 5/00
C 08 K 13/02

(30) Priorität: 30.12.83 DE 3347523

(43) Veröffentlichungstag der Anmeldung: 24.07.85 Patentblatt 85/30

(84) Benannte Vertragsstaaten: AT BE CH DE FR GB IT LI NL SE

(71) Anmelder: EC ERDÖLCHEMIE GMBH
Postfach 75 20 02
D-5000 Köln 71(DE)

(72) Erfinder: Stahlke, Kurt-Rainer, Dr.
865 Foxland Drive
Pittsburgh, Pa 15243(US)

(72) Erfinder: Klaer, Franz-Josef
Turmstrasse 12
D-5000 Köln(DE)

(72) Erfinder: Dobmaier, Gert, Dr.
Tempelhoferstrasse 68
D-5090 Leverkusen 1(DE)

(72) Erfinder: Von Bonin, Wulf, Dr.
Mendelssohnstrasse 30
D-5090 Leverkusen 1(DE)

(72) Erfinder: Quaas, Gerwolf
Bilharzstrasse 11
D-5000 Köln 80(DE)

(74) Vertreter: Mann, Volker, Dr. et al,
c/o Bayer Aktiengesellschaft Zentralbereich Patente Marken und Lizenzen
D-5090 Leverkusen-Bayerwerk(DE)

(54) **Flammfest eingestellte Polymere.**

(57) Beschrieben werden flammfest eingestellte Polymere, die gekennzeichnet sind durch einen Gehalt von 25 - 65 Gew.-%, bezogen auf das Gesamtgewicht des flammfest eingestellten Polymers, einer Kombination von Zusätzen der Gruppe A und Zusätzen der Gruppe B und/oder C, wobei

die Gruppe A aus phosphorhaltigen Salzen des Ethylendiamins und/oder Melamins,

die Gruppe B aus phosphorhaltigen Salzen von Harnstoffverbindungen und

die Gruppe C aus weiteren Flammschutzadditiven besteht.

Die einzelnen Stoffe der Gruppen A und B liegen unabhängig voneinander in Mengen von 5 - 55 Gew.-%, bezogen auf das Gesamtgewicht des flammfest eingestellten Polymers vor. Die Stoffe der Gruppe C liegen in einer Menge von 0,4 bis 12 Gew.-% vor. Die flammfest eingestellten Polymeren zeichnen sich durch Abwesenheit von Halogen- und Antimonverbindungen aus. Sie finden Verwendung für Extrudate und Spritzgußartikel.

EP 0 149 171 A2

EC Erdölchemie GmbH Köln-Worringen
Ha/Kü-c

Flammfest eingestellte Polymere

Die vorliegende Erfindung bezieht sich auf flammfest eingestellte, halogenfreie und Antimon-freie Polymere und deren Verwendung.

Es ist bekannt, z.B. Polyolefine durch Zusatz von Halogenverbindungen und/oder Antimonverbindungen flammfest einzustellen. Bei den ersteren wird im Brandfall Halogenwasserstoff entwickelt, der wegen seiner korrosiven Eigenschaften schwerwiegende Folgeschäden hinterläßt. Im zweiten Falle sieht man sich in jüngster Zeit starken Bedenken aus toxikologischen Gründen gegenüber.

Es ist weiterhin bereits versucht worden, auf Halogenverbindungen und Antimonverbindungen bei der Flammfestausrüstung von Polymeren zu verzichten, indem beispielsweise Metallhydroxide, die Kristallwasser oder chemisches gebundenes Wasser abspalten können, Verbindungen, die Inertgas abspalten, oder Phosphorverbindungen, einschließlich des elementaren

roten Phosphors, eingesetzt werden (vgl. H.A. Mayer, G.Hog, Intern. Wire and Cable Symposium 1980, Cherry Hill, USA; W.C. Kurgla und A.J. Papa, Flame Retardency of Polymeric Material, Vol. 5, 127 (1979)). Die bisher verwendeten halogenfreien Flammschutzmittel zeigen in der Praxis jedoch nicht ausreichende Eigenschaften, wie sie von denen auf der Basis Halogenverbindungen/ Antimontrioxid bekannt sind. Eine Verbesserung der Flammschutzeigenschaften solcher Halogen- und/oder Antimon-freier Flammschutzmittel könnten nur durch einen höheren Anteil in Polymeren erreicht werden. Da solche Additive jedoch mit Polymeren, besonders Polyolefinen, nur schlecht verträglich sind, sinken durch hohen Gehalt an Flammschutzmitteln die mechanischen Eigenschaften der aus solchen Polymeren hergestellten Formkörper.

Es ist weiterhin bekannt, flammwidrige schäumbare Formmassen, sogenannte Intumeszenzmittel, herzustellen, die als Kitte, Spachtelmassen oder Überzüge für Fugen, Wände oder Formköper eingesetzt werden. Solche Intumeszenzmittel bestehen beispielsweise aus einer Kohlenstoffquelle (einem sogenannten "Karbonific"), einem Borsäure oder Phosphorsäure liefernden Katalysator und einem Treibmittel als Quelle nicht entflammbarer Gase. Solche Intumeszenzmittel, die als Katalysator Ethylendiammoniumphosphate enthalten, sind beispielsweise in der DE-OS 29 38 874 beschrieben.

In der DE-OS 32 28 863 ist weiterhin beschrieben worden, thermoplastische Intumeszenzmassen auf der Basis

von polymeren Werkstoffen und Ethylendiaminphosphat, gegebenenfalls in Kombination mit Cyanursäure-Abkömmlingen, herzustellen. Die alleinige Verwendung von Ethylendiaminphosphat, gegebenenfalls in Kombination mit Cyanursäure-Abkömmlingen hat sich jedoch beim Einsatz in z.B. Polyolefinen, insbesondere bei der Verwendung im Kabelbereich, für die Praxis als nicht ausreichend herausgestellt.

Es wurden nunmehr flammfest eingestellte Polymere gefunden, die gekennzeichnet sind durch einen Gehalt von 25 - 65 Gew.-%, bezogen auf das Gesamtgewicht des flammfest eingestellten Polymers, einer Kombination von Zusätzen der Gruppe A und Zusätzen der Gruppe B und/oder C, wobei

die Gruppe A aus phosphorhaltigen Salzen des Ethylendiamins und/oder Melamins,

die Gruppe B aus phosphorhaltigen Salzen von Harnstoffverbindungen und

die Gruppe C aus weiteren Flammschutzadditiven besteht.

Die erfindungsgemäß flammfest eingestellten Polymeren zeichnen sich also durch die Verwendung der unter B und/oder unter C genannten Stoffe zusätzlich zu den unter A genannten aus; in bevorzugter Weise werden Zusätze aus allen drei Gruppen A, B und C eingesetzt.

um differenzierte, bestimmte Normen erfüllende Flammfest-Einstellungen zu erzielen.

Als Stoffe unter A seien phosphorhaltige Salze des Ethylendiamins und/oder Melamins genannt. Phosphorhaltige Salze sind hierbei die Salze der Orthophosphorsäure der Pyrophosphorsäure, von Polyphosphorsäuren, der phosphorigen Säure und von polyphosphorigen Säuren. Die Salze des Ethylendiamins und des Melamins mit den genannten Säuren können allein oder in Kombination eingesetzt werden. In bevorzugter Weise werden die Salze der Orthophosphorsäure eingesetzt. Für den Fall, daß Ethylendiaminphosphat (EDP) und Melaminphosphat im Gemisch eingesetzt werden, sei ein Gewichtverhältnis von 20 : 1 bis 1 : 20, bevorzugt 3 : 1 bis 1 : 3, genannt. In besonders bevorzugter Weise wird als Stoff unter A EDP allein eingesetzt.

Als Stoffe unter B seien phosphorhaltige Salze von Harnstoffverbindungen genannt. Als phosphorhaltige, salzbildende Säuren kommen die gleichen wie die bei den Stoffen unter A genannten in Betracht. Die Harnstoffverbindungen lassen sich unter die allgemeine Formel

$$H_2N-\underset{\underset{X}{\|}}{C}-NHR \qquad (I)$$

stellen, in der

X für O, S oder NH und

R für H, $NH_2$, CN, $-C(=NH)-NH_2$ oder $-N=C(NH_2)_2$ stehen.

Beispiele für phosphorhaltige Salze von Harnstoff-Verbindungen sind solche Salze von Harnstoff, Guanidin, Semicarbazid, Aminoguanidin, Dicyandiamid, Dicyandiamidin, Thioharnstoff und Thiosemicarbazid. In bevorzugter Weise werden Salze von Aminoguanidin oder Dicyandiamidin eingesetzt.

Als Stoffe unter C seien weitere Flammschutzadditive genannt, wie Metallhydroxide, z.B. Aluminiumhydroxid, oder Magnesiumhydroxid, Borate, z.B. Ca- oder Na-borate (Borax), roter Phosphor, Pentaerythrit, Ammoniumoxalat, Ammoniumthiocyanat sowie andere übliche halogenfreie und Antimon-freie Flammschutzadditive. Bevorzugte Stoffe der Gruppe C sind Ammoniumoxalat, Pentaerythrit und roter Phosphor.

Die Gesamtmenge der Stoffe unter A und B und/oder C in flammfest eingestellten Polymeren beträgt 25 - 65 Gew.-%, bevorzugt 25 - 50 Gew.-%, bezogen auf das Gesamtgewicht des flammfest eingestellten Polymers. Die Einzelkomponenten unter A und B können im Rahmen der genannten Gesamtmenge unabhängig voneinander in einer Menge von 5 - 45 Gew.-%, bevorzugt 10 - 35 Gew.-%, bezogen auf das Gesamtgewicht des flammfest eingestellten Polymers, vorhanden seien. Die Stoffe unter C können

in einer Menge von 0,4 - 12 Gew.-%, bevorzugt 0,5 - 10 Gew.-% besonders bevorzugt 0,5 - 5 Gew.-%, bezogen auf das Gesamtgewicht des flammfest eingestellten Polymers, vorhanden sein.

Als erfindungsgemäß flammfest einstellbare Polymere seien beispielsweise genannt: Kohlenwasserstoff-Polymere, wie Olefin(co)polymere und Acrylnitril-Butadien-Styrol-Copolymere (ABS), Kautschuke, wie Ethylen-Propylen-Copolymere (EPM) und Ethylen-Propylen-Terpolymere (EPDM), sowie heteroatomhaltige Polymere, wie Polyamid und teilweise verseiftes Ethylen-Vinylacetat-Copolymer. Als bevorzugte Polymere seien die Kohlenwasserstoff-Polymeren, als besonders bevorzugte die Olefin(co)-polymeren genannt.

Als erfindungsgemäß flammfest einstellbare Olefin(co)-polymere seien beispielsweise solche genannt, die in bekannten Hochdruckverfahren mit Hilfe radikalischer Initiatoren, in bekannten Mitteldruck- oder Niederdruckverfahren mit Metallkomplexkatalysatoren, beispielsweise vom Ziegler-Natta-Typ, oder in Lösungs- oder Suspensionspolymerisationsverfahren ebenfalls an Metallkomplexkatalysatoren hergestellt worden sind. Als Monomere seien Olefine mit 2 - 8, bevorzugt 2 - 4 C-Atomen und einer olefinischen Doppelbindung genannt, wobei die olefinische Doppelbindung sich bevorzugt endständig befindet. Beispiele hierfür sind Ethylen, Propylen, Butene, Isobuten, Hexene und Octene. Als Comonomere seien außer den bereits als Monomere genannten

Olefinen noch Vinylester, wie Vinylacetat, Vinylpropionat oder Vinylbutyrat, sowie Acrylsäureester, wie Acrylsäuremethylester oder Acrylsäureethylester, genannt. Beispiele für solche erfindungsgemäß einsetzbaren Olefin(co)polymere sind: Polyethylen hoher Dichte (HDPE), Polyethylen niederer Dichte (LDPE), Polypropylen, Polybutylen, Polyisobutylen, Ethylen-propylencopolymere, Ethylen-butylen-copolymere, Ethylen-hexencopolymere, Ethylen-octen-copolymere, Propen-buten-copolymere, Ethylen-vinylacetat-copolymere, Ethylen-acrylsäureester-copolymere. Für den Fall, daß neben einem hauptsächlich in das Polymere eingebauten Monomeren ein Comonomeres zur Verwendung kommt, sei für dieses ein Gehalt von 1 - 30 Gew.-%, bevorzugt 3 - 20 Gew.-%, besonders bevorzugt 5 - 18 Gew.-%, genannt.

In bevorzugter Weise werden Hochdruckpolyethylene mit niederer Dichte (LDPE), nach dem Hochdruckverfahren hergestellte Ethylen-vinyl-acetat-copolymere (EVA) sowie niederdichtes LLDPE (Linear Low Density Polyethylene), worunter Copolymere von Ethylen mit Buten-1, Hexen-1 oder Octen-1 verstanden werden, eingesetzt. In besonders bevorzugter Weise werden LDPE und EVA-Typen eingesetzt. Die EVA-Typen haben einen Vinylacetat(VA)-Gehalt im Rahmen der oben angegebenen Comonomeren-Gehalte und beim VA in ganz bevorzugter Weise von 8 - 18 Gew.-%.

Die erfindungsgemäßen flammfest eingestellten Polymeren eignen sich durch die Vielfalt der Kombinationsmöglichkeit der Flammschutzmittel zur Herstellung sehr differenzierter Flammschutz-Einstellungen, um verschiedene Normen zu

erfüllen. Sie weisen LOI-Werte (Lowest Oxygen Index) von mindestens 27 % nach ASTM D 2863 bei für die Praxis noch brauchbaren Reißfestigkeitswerten und Reißdehnungswerten auf.

Diese Werte sind ausreichend für alle in der Praxis geforderten Anwendungen für feuersichere Zwischenwände, feuersichere Abdeckungen und insbesondere im Kabelbereich zur Abwehr von Schmorbränden. Die Erfindung betrifft daher die Verwendung der flammfest eingestellten Polymeren zur Herstellung der verschiedensten Extrudate und Spritzgußartikel. Die Erfindung betrifft insbesondere die Verwendung der flammfest eingestellten Polymeren, besonders von Olefin(co)polymeren zur Herstellung von Kabelmänteln und Kabelverbindungsmuffen.

Die erfindungsgemäß flammfest eingestellten Polymere können in üblicher Weise durch Einarbeiten der oben unter A und B und/oder C genannten Stoffe in die nicht ausgerüsteten Polymeren in Schneckenextrudern oder Kalandern bei Temperaturen unter 240°C, bevorzugt bei 190-210°C hergestellt werden. Für diese Einarbeitung kann beispielsweise eine Vormischung durch Auftrommeln der Flammschutzadditive auf Granulate des Basisharzes in Mischtrommeln vorgenommen werden. Weiterhin kann von extrem hochgefüllten Masterbatches, die bis zu 80 Gew.-% der Flammschutzadditive enthalten, ausgegangen werden, die durch Zumischung von weiteren Polymeren auf die gewünschte Endkonzentration an Flammschutzadditiven eingestellt werden. Weiterhin ist es möglich, Flammschutzadditive, bevorzugt in Form von Masterbatches, über Satellitenextruder im Herstellungsverfahren der Polymeren zu dosieren.

Die erfindungsgemäßen flammfest eingestellten Polymeren, besonders die Olefin(co)polymeren können ferner nach praxisüblichen Verfahren peroxidisch, durch Silane oder durch Strahleneinwirkung vernetzt werden.

Beispiele 1 - 13

Das zur Untersuchung eingesetzte Ethylen-vinylacetat-copolymere 1 (EVA 1) wies einen Schmelzindex von 1,5 g/10 min. (190°C; 2,16 kp) sowie einen Vinylacetatgehalt (VA) von 8,5 % auf. Das EVA 2 hatte einen Schmelzindex von 1,7 g/10 min. sowie einen VA-Gehalt von 18 %.

Die LOI-Werte (Lowest Oxygen Index) wurde nach ASTM D 2863, die Reißfestigkeitswerte und die Reißdehnungswerte nach DIN 53 455 bestimmt. Weiterhin erfolgte eine Klassifizierung nach dem Brandtest UL-94 V sowie in einigen Fällen nach VDE 0472.

Zum Vergleich dienen Flammfest-Einstellungen mit $Al(OH)_3$ bzw. Ethylendiaminphosphat allein (Vergleichsbeispiele 7, 12 und 13).

Zur Prüfung wurden in den Beispielen 1-7 Normkleinstäbe mit einer Stärke von 3 mm und in den Beispielen 8-13 ummantelte Cu-Adern (0,6 mm Cu, 3 mm EVA), die in einem Einwellen-Extruder hergestellt worden waren, eingesetzt.

Die Ergebnisse sind in der Tabelle zusammengestellt.

EC 148

Tabelle (Versuche 1-13)

| Nr. | Harz | Flammschutzadditiv | LOI-Wert /‾%‾/ | Brandtest nach UL-94 V / VDE 0472 | |
|---|---|---|---|---|---|
| 1 | EVA 1 | 30 % EDP 5 % DCDP | 33,0 | VO | bestanden |
| 2 | " | 30 % EDP 5 % $NH_4$-oxalat | 29,5 | VO | |
| 3 | " | 30 % EDP 5 %Penta-erythrit | 31,5 | VO | |
| 4 | " | 30 % EDP 10 % DCDP | 37,5 | VO | bestanden |
| 5 | " | 30 % EDP 10 & $NH_4$-oxalat | 34,5 | VO | |
| 6 | " | 30 % EDP 10 % Penta-erythrit | 31,5 | VO | |
| 7 | " | 40 % EDP | 30,5 | VO | nicht bestanden |
| 8 | " | 30 % EDP/Mel<br>10 % $NH_4$-oxalat | 27,0 | V2 | |
| 9 | " | 30 % EDP/Mel.<br>10 % Pentaerythrit | 29,5 | VO | |
| 10 | " | 30 % EDP/Mel.<br>20 % DCDP | 47,0 | VO | bestanden |
| 11 | " | 30 % EDP/Mel.<br>20 % Pentaerythrit | 30,5 | VO | bestanden |
| 12 | " | 60 % $Al(OH)_3$ | 31,5 | V2 | nicht bestanden |
| 13 | EVA 2 | 55 % $Al(OH)_3$ | 33,0 | V2 | nicht bestanden |

EDP = Ethylendiaminphosphat

EDP/Mel. = EDP/Melaminphosphat 9 : 1 (Gew.)

DCDP = Dicyandiamidinphosphat

## Patentansprüche

1. Flammfest eingestellte Polymere, gekennzeichnet durch einen Gehalt von 25 - 65 Gew.-%, bezogen auf das Gesamtgewicht des flammfest eingestellten Polymers, einer Kombination von Zusätzen der Gruppe A und Zusätzen der Gruppe B und/oder C, wobei

   die Gruppe A aus phosphorhaltigen Salzen des Ethylendiamins und Melamins,
   die Gruppe B aus phosphorhaltigen Salzen von Harnstoffverbindungen und
   die Gruppe C aus weiteren Flammschutzadditiven besteht.

2. Flammfest eingestellte Polymere nach Anspruch 1, gekennzeichnet durch einen Gehalt an 25 - 50 Gew.-% der Kombination von Zusätzen.

3. Flammfest eingestellte Polymere nach Anspruch 1, dadurch gekennzeichnet, daß die Einzelgehalte der Zusätze aus den Gruppen A und B unabhängig voneinander 5 - 55 Gew.-% und aus der Gruppe C 0,4 - 12 Gew.-%, bezogen auf das Gesamtgewicht des flammfest eingestellten Polymers, betragen.

4. Flammfest eingestellte Polymere nach Ansprüchen 1 - 3, dadurch gekennzeichnet, daß die Einzelgehalte der Zusätze aus den Gruppen A und B unabhängig voneinander 10 - 50 Gew.-% und der Gehalt an Zusatz aus der Gruppe C 0,5 - 10 Gew.-% betragen.

5. Flammfest eingestellte Polymere nach Ansprüchen 1 - 4, dadurch gekennzeichnet, daß als Polymeres ein Olefin(co)polymeres eingesetzt wird.

6. Flammfest eingestellte Polymere nach Ansprüchen 1 - 4, dadurch gekennzeichnet, daß als Polymeres ein Olefin(co)polymeres niederer Dichte eingesetzt wird.

7. Flammfest eingestellte Olefin(co)polymere nach Ansprüchen 1-4, dadurch gekennzeichnet, daß als Olefin(co)polymeres ein Ethylen-Vinylacetat-Copolymeres (EVA) eingesetzt wird.

8. Flammfest eingestellte Olefin(co)polymere nach Ansprüchen 1 - 7, gekennzeichnet durch einen Gehalt an Zusätzen aus allen drei Gruppen A, B und C.

9. Verwendung von flammfest eingestellten Polymeren nach Ansprüchen 1 - 8 zur Herstellung von Extrudaten und Spritzgußartikeln.

10. Verwendung von flammfest eingestellten Polymeren nach Ansprüchen 1 - 8 zur Herstellung von Kabelmänteln und Kabelverbindungsmuffen.